# EUROPEAN PATENT APPLICATION

(11) **EP 3 851 763 A1**
(43) Date of publication of application: **21.07.2021**
(21) Application number: 20217583.2
(22) Date of filing: 29.12.2020
(51) Int. Cl.: F24S 25/12, H02S 20/32, H02S 30/00, F24S 25/00

(54) **PRE-ASSEMBLY PLANT FOR PHOTOVOLTAIC SOLAR TRACKERS AND PRE-ASSEMBLY METHOD ASSOCIATED WITH SAID PLANT**

(30) Priority: 14.01.2020 ES 202030014
(71) Applicant: Esasolar Energy System, S.L., 28010 Madrid (ES)
(72) Inventor: MALDONADO FERREIRA, José Antonio, 28015 Madrid (ES)
(74) Representative: Tribalyte Ideas

(57) **Abstract**

The invention relates to a pre-assembly plant (1) for the pre-assembly of units (2) of a solar tracker, wherein said units (2) comprise a set of photovoltaic panels (3) arranged on a structure formed by a main shaft (4) and a plurality of purlins (5). Said plant (1) advantageously comprises a conveyance line (7, 7') for conveying components of the units (2), in the proximity of which at least the following pre-assembly sections are arranged: a section equipped with receiving means for receiving components of the units (2), and an unloading area (8) thereof; a fitting section (10) for fitting the purlins (5) to the shafts (4); an installation section (12) for installing photovoltaic panels (3) on the purlins (5); and a finishing section for the pre-assembly of the units (2) and for the stockpiling (13) thereof in support structures (13'). The invention likewise relates to a pre-assembly method for the pre-assembly of units (2) comprising the use of said plant (1).

## Description

### FIELD OF THE INVENTION

The present invention is comprised in the field of solar energy generation technologies. More specifically, the invention relates to a pre-assembly plant and method for the pre-assembly of solar trackers, preferably of the photovoltaic type. Said pre-assembly plant and the pre-assembly method associated therewith allow considerably reducing the installation times of trackers in the solar field, as well as the human and operative effort corresponding to said installation, or the risk of breaking or wasting material associated therewith.

### BACKGROUND OF THE INVENTION

The receiver systems or trackers commonly used in the production of photovoltaic solar energy comprise the use of a bearing structure comprising a main shaft and a plurality of transverse bars (or "purlins") where planar photovoltaic panels are installed, adopting various configurations. Thus, for example, it is possible to arrange a plurality of rectangular panels in a horizontal configuration in relation to a main shaft (H-type trackers), or in a vertical configuration (V-type trackers) with respect to said shaft. These panels must ideally be oriented, at all times, perpendicular to the sunlight rays, for which purpose the tracker needs the capacity to rotate in space, following the position of the sun. The photovoltaic cells of the panels convert the energy of the sun into electricity which, by means of wiring and current inverters, is accumulated and/or harnessed for industrial or commercial use.

Many photovoltaic trackers used in large solar plants (with lengths that are tens of meters for each tracker) are based on the use of a rotating main shaft (or "torsion shaft"), which is arranged substantially horizontal on the terrain of the solar plant and supported on a plurality of posts . The rotation of the main shaft of the tracker allows for better orientation toward the solar resource, which translates into a greater angular harnessing thereof, with the subsequent improvement in energy generation. Said rotation is provided by means of a system of ball joints which are fixed in a rotating manner with respect to the main shaft of the tracker and integrally connected to the posts thereof.

The installation method for installing a photovoltaic tracker with rotational capacity in the solar field usually entails performing the following steps:
- Conveying all the components of the set of the tracker to the installation site thereof in the solar field.
- Driving, anchoring, or cementing of the posts on the terrain.
- Installation of the drive support, rotation module, and motor.
- Installation of the ball joint supports on the posts.
- Installation of the ball joints on the supports.
- Conditioning of the shafts of the tracker on the ball joints and positioning thereof with respect to the rotation module.
- Installation of the purlins on the shafts.
- Installation of the photovoltaic modules on the purlins.

Despite the widespread adoption of this method today, it is not free of a high human and economic operating cost. This cost is due primarily to the dependence on skilled manual labor throughout the entire solar field, since the most delicate operations of the method must be done on site, that is, on the actual line of posts of the trackers, where both the systems of ball joints thereof and the main shaft and the solar panels fixed to same by means of purlins must be installed. This dependence further increases the risks of breaking or creating a flaw in trackers during their installation, given that all their components must be moved and assembled in the actual solar field, where the existence of adverse weather or terrain conditions is common.

It is therefore necessary in the present technical field to develop new installation systems and methods which allow reducing assembly times of trackers, as well as their operating risks associated with the solar field, improving their efficiency and scalability. The present invention is aimed at meeting said need by means of a novel pre-assembly plant for the pre-assembly of solar units of a tracker, and of different pre-assembly and installation methods for the pre-assembly and installation of solar trackers associated with said plant.

### BRIEF DESCRIPTION OF THE INVENTION

To solve the drawbacks of the state of the art described above, the present invention proposes, as a first object, a pre-assembly plant for the pre-assembly of solar units (referred to as "solar module sets", or simply as "units") of a photovoltaic solar tracker, where each of said units comprises a set of photovoltaic panels arranged on a structure formed by a main shaft and a plurality of purlins, or transverse bars, where said structure is suitable for being fixed to a set of posts driven, anchored, or cemented on the terrain of a solar field.

Advantageously, the plant of the invention comprises a conveyance line for conveying components of the units for the assembly thereof, in the proximity of which at least the following pre-assembly sections are arranged:
- a section equipped with receiving means for receiving components of the units, such as photovoltaic panels, shafts, and purlins, as well as the connecting elements thereof, and an unloading area thereof;
- a fitting section for fitting the purlins to the shafts;
- an installation section for installing photovoltaic panels on the purlins;
- a finishing section for finishing the pre-assembly of the units and for the stockpiling thereof on support structures.

As a result of the pre-assembly plant according to the present invention, it is possible to reduce the assembly times of the trackers in any geographic situation under adverse weather conditions (such as wind, rain, or extreme temperatures). Therefore, the pre-assembly plant allows assembling the units of the structures (mainly shafts with purlins, U-bolts, modules, ball joints, and supports thereof), which represents most of the working time of the field assembly personnel when it is a standard assembly. Therefore, the in-line assembly method proposed by the invention significantly reduces the assembly times of the trackers, meaning that only the assembly of the already pre-assembled units on the posts in the solar field is required to be performed. Furthermore, the plant advantageously provides a novel unit stacking system which facilitates the stockpiling and conveyance thereof in the solar field. Likewise, with the automation of the assembly systems proposed by the plant of the invention, it is not necessary to hire a large number of personnel for the on-site (field) installation of the trackers, since the assembly of most of same is performed in the actual plant by skilled personnel.

In a preferred embodiment of the invention, the conveyance line comprises at least one discontinuous region, suitable for performing pre-assembly operations on the units at a lower height than that of said line. More preferably, the discontinuous region of the conveyance line has a length less than half the length of the shafts.

In another preferred embodiment of the invention, the conveyance line comprises at least one region with a conveyance segment on which the main shaft of the unit can be longitudinally arranged, and a region with two substantially parallel conveyance segments on which the purlins of the units can be transversely arranged, the shaft remaining between said segments, suspended from the purlins.

In another preferred embodiment of the invention, the pre-assembly plant further comprises a marking section for marking the shafts of the photovoltaic solar tracker.

In another preferred embodiment of the invention, the units further comprise one or more ball joints for connecting to the posts of the solar trackers, where the pre-assembly plant further comprises a fitting section for fitting the mentioned ball joints to the main shafts of the units.

In another preferred embodiment of the invention, the ball joints are connected to the main shaft by means of a system of bushings that can be fixed through clamps. More preferably, the ball joints comprise support means that can be fixed to the posts of the tracker.

In another preferred embodiment of the invention, the finishing section for the pre-assembly and stockpiling of units comprises a plurality of modular and/or stackable support structures.

In another preferred embodiment of the invention:
- the plant comprises a canopy structure suitable for at least partially covering one or more of its pre-assembly sections;
- said plant comprises several conveyance lines for the assembly of the units in parallel; and/or
- said plant has a mobile and/or uninstallable structure of the solar field.

A second object of the invention relates to a pre-assembly method for the pre-assembly of units of a photovoltaic solar tracker in a pre-assembly plant according to any of the embodiments described herein, and comprising the performance of the following steps, in any technically possible order:
- the components of the units are conveyed to an unloading area thereof, and the main shafts of the units are arranged longitudinally on the conveyance line;
- the purlins are fitted to the main shafts of the units;
- the photovoltaic panels are installed on the purlins;
- the pre-assembled units are removed from the conveyance line and stored on support structures for the subsequent conveyance thereof to the solar field.

In a preferred embodiment of the invention, the method comprises a step of marking of the shafts for the subsequent assembly of the purlins or ball joints of the solar tracker on the marks arranged in said shafts.

In another preferred embodiment of the invention, the method comprises a step of fitting the ball joints to the main shafts of the units and, optionally, angularly orienting said ball joints prior to the stockpiling of the units.

In another preferred embodiment of the invention, in which the plant has a mobile and/or uninstallable structure of the solar field, the method comprises removing said structure after carrying out the pre-assembly of a plurality of units.

A third object of the invention relates to an installation method for installing a photovoltaic solar tracker, comprising:
- the performance of a pre-assembly method for the pre-assembly of one or more units according to any of the embodiments described herein;
- the conveyance of said units in a stockpiled manner to a point of installation in the solar field; and
- the assembly thereof on a plurality of posts driven, anchored, or cemented on the terrain.

In any of the preferred embodiments of the methods described herein, one or more of the steps of said methods can be carried out through partially or fully robotized means.

As a result of the method of the invention, it is possible to substantially reduce installation times by performing in parallel the driving of the posts in the solar field while the assembly of the units of the tracker is performed in the pre-assembly plant. Furthermore, the risk of deterioration or breaking of the components of the tracker in the solar field is considerably limited.

In the scope of interpretation of the present document, the expression "substantially" will be understood as identical or comprised in a margin of variation of ±20%.

Likewise, the term "solar tracker" applied to the different embodiments of the invention will be understood as any type of photovoltaic solar receiver system, with or without solar tracking, provided that said tracker/receiver is supported on a main shaft substantially parallel to the ground and supported on a plurality of support posts, beams, or pillars anchored to or cemented in the ground. Within this scope of interpretation, the term tracker/receiver is not to be understood as being limited to the technologies of photovoltaic production either, or it may also be applicable in another type of similar generation technologies, such as solar thermal energy generation.

### DESCRIPTION OF THE DRAWINGS

The preceding and other features and advantages will be better understood from the detailed description of the invention, as well as from the preferred embodiments referring to the attached drawings, in which:
Figure 1 depicts a general diagram of the pre-assembly plant of the invention according to a preferred embodiment thereof.
Figures 2-3 show two perspective views of the steps of fixing the purlins to the shaft of the photovoltaic solar tracker according to a preferred embodiment of the invention.
Figure 4-5 respectively show a perspective view of a ball joint and its support element on a post of the tracker, and a perspective view illustrating the fixing of said ball joint to the shaft of the tracker, according to a preferred embodiment of the invention.
Figure 6 shows a perspective view of the step of fixing the angle of orientation of a ball joint relative to the shaft and to the photovoltaic panels of the solar tracker, prior to the stockpiling of the units thereof, according to a preferred embodiment of the invention.
Figure 7 shows a perspective view of a known photovoltaic panel.
Figures 8-9 respectively show a profile view of a photovoltaic panel fixed to a purlin, and a perspective view of a detail in which the attachment elements between said panel and said purlin according to a preferred embodiment of the invention are depicted.
Figure 10 shows a perspective view of a shaft of the tracker on a conveyance line, according to an embodiment of the invention, on which a set of purlins and photovoltaic panels have been fitted.
Figure 11 shows a perspective view of a set of completely pre-assembled units stacked on a stockpiling structure, according to a preferred embodiment of the invention.

**List of reference numbers of the figures:**

| | |
|---|---|
| (1) | Mobile assembly plant |
| (2) | Units, solar units, or solar module sets |
| (3) | Photovoltaic panel |
| (4) | Main shaft of the tracker |
| (5) | Transverse beams or purlins |
| (6) | Ball joints |
| (7, 7') | Conveyance lines for components |
| (8) | Unloading of the components of the units |
| (9) | Marking of the shafts of the units |
| (10) | Fitting of the purlins to the shafts |
| (10') | Screws |
| (10") | Nuts |
| (10"') | Adjustable U-bolts |
| (11) | Fitting of the ball joints to the shafts |
| (11') | Bushings |
| (11") | Clamps |
| (11"') | Support means that can be fixed to the posts of the tracker |
| (11"") | Ball joint locking element |
| (12) | Installation of photovoltaic panels |
| (12') | Frame of the photovoltaic panel |
| (12") | Photovoltaic cells |
| (12"') | Tightening means |
| (13) | Stockpiling of the units |
| (13') | Support structure of units |

### DETAILED DESCRIPTION OF THE INVENTION

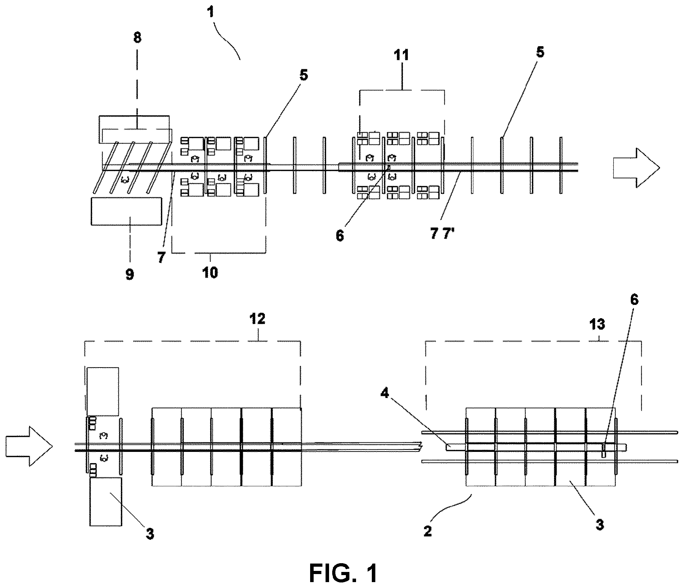

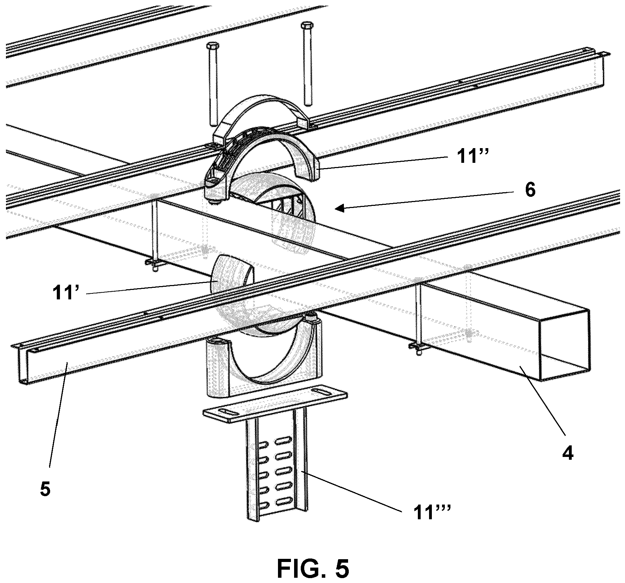

A detailed description of the invention in reference to a preferred embodiment thereof according to the information provided in Figures 1-11 herein is described below. Said description is provided for purposes of illustrating but not limiting the claimed invention.

Figure 1 shows a diagram of a preferred embodiment of the mobile plant (1) of the invention, where the different sections and main modules thereof are depicted. The different steps of assembling the solar units (2) (also referred to as "solar module sets", or "units") are depicted from left to right, in chronological order, each of said units (2) being formed by a set of photovoltaic panels (3) arranged on a structure formed by a main shaft (4) and a plurality of transverse beams (5) (or "purlins").

The plant (1) of the invention is preferably installed on an area of land close to the solar field, or in the actual solar field, from where the finished units (2) could be moved, and stacked together, to different installation points for installing solar trackers in said field. Each of the units (2) is assembled preferably on a set of posts previously driven, anchored, or cemented in the solar field. Likewise, in a preferred embodiment of the invention, the units (2) can be connected to a plurality of ball joints (6) which serve both for structurally connecting the shaft (4) with the posts and for providing rotational capacity to the solar tracker (and therefore, capacity to track the sun throughout the day by means of the motorization of the shaft (4) and the programming of the rotation thereof through electromechanical and/or electronic control means).

In this manner, and by improving the assembly methods of the state of the art, the capacity to be able to previously assemble all the units (2) in the pre-assembly plant (1) and stack them considerably streamlines the installation operations for installing the solar trackers. Likewise, once said operations have ended, the pre-assembly plant (1) can be dismantled and removed from the solar field in a mobile manner, which also simplifies the permanent infrastructure required in said field, and it furthermore allows reusing the plant (1) for other solar fields, as well as installing it again at other later times, should it be necessary to install new trackers (for example, to replace or to enlarge part of the solar field).

To demarcate the grounds of the pre-assembly plant (1), a canopy structure will preferably be used intended for covering one or more of the pre-assembly modules of said plant (1). The main purpose of doing this is to protect both the operators in charge of assembling the units (2) and the components thereof from weathering (mainly the sun, rain, and wind). Therefore, the dimensions of the canopy must be large enough to house both the human assembly team and the assembly and installation machinery and tools. Alternatively, or complementary, in a preferred embodiment of the invention one or more of the sections of the pre-assembly plant (1) may be comprised in a rolling installation, i.e., forming part of a vehicle of the type of a truck, a car, a trailer, or the like.

The arrangement of the assembly modules for assembling the units (2) in the plant (1) has a preferably linear configuration under which at least one conveyance line (7) for conveying elements is arranged, the purpose of which is to convey the components of the units (2) as they are assembled with one another from an initial point of the plant (1) (from the left, in Figure 1), to an end point (to the right) where the units (2) are completely assembled and ready to be conveyed to different points of the solar field for assembly on the posts, the installation of the solar trackers thus being completed. In the embodiments of the invention based on a single conveyance line (7), the assembly of the units (2) is performed in series. Nevertheless, in alternative embodiments, it is also possible to arrange more than one assembly line (7) in the plant (1), which also allows performing pre-assembly operations in parallel.

The conveyance line (7) preferably comprises rotating and/or sliding means, such as conveyor belts, rollers, or the like, on which the components of the units (2) are arranged for their displacement along the assembly line of the plant (1). The operators in charge of the pre-assembly tasks are arranged, accordingly, at different points of the conveyance line (7), for carrying out the steps of the assembly method for assembling the units (2). To that end, the conveyance line (7) must have a height suitable for the operators to work comfortably on same. The conveyance line (7) may preferably comprise a single rotating means (for example, a conveyor belt) or, alternatively, two or more rotating means (for example, two conveyor belts) arranged in a substantially parallel manner.

Each of the sections of the pre-assembly plant (1) according to the preferred embodiment shown in Figure 1, as well as the different steps of the pre-assembly method for the pre-assembly of units (2) according to the present invention are described below:

### a) Unloading section (8) for unloading components:

This section is preferably intended for receiving the different components of the units (2), such as the photovoltaic panels (3), shafts (4), and purlins (5), as well as the connecting elements therebetween. To that end, an unloading area (8) for the mentioned components (3, 4, 5) will be enabled, preferably by means of a crane or similar machinery, which will be conveyed to the plant (1) from a factory or remote storage, for example in a truck. The components (3, 4, 5) will preferably be stacked, such that the unloading (8) thereof can be done in a simple manner through their connection to the crane by means of tools such as slings, spring hooks, etc.

In a preferred embodiment of the invention, during the step of unloading (8) the shafts (4) of the trackers are arranged linearly on the conveyance line (7), such that the rest of the components (3, 5) can be assembled on said shafts (4) as they move along the linear path of the plant (1).

### b) Marking section (9) for marking the shafts (4):

Once the shafts (4) are arranged on the conveyance line (7), it is possible to carry out an optional step of marking (9) same for the purpose of indicating those points where the connections with the purlins (5) as well as with any other components fixed to said shafts (4), such as the ball joints (6), will be performed. To that end, the operators will mark (for example, by means of marker pens) on the shaft (4) where said purlins (5) and ball joints (6) will be located, according to the specific dimensions required for the solar tracker. In other embodiments, the shafts (4) can reach the plant (1) previously marked at the factory or in storage, which means that this step is not necessary in the pre-assembly plant (1).

### c) Fitting section (10) for fitting the purlins (5):

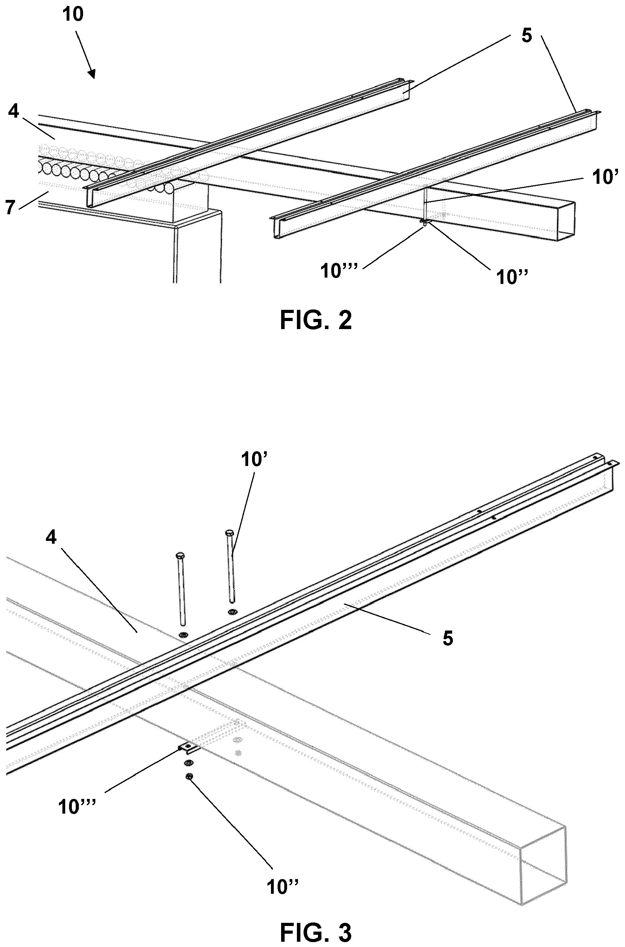

The fitting (10) of the purlins (5) to the shafts (4) at the points intended for that purpose will be performed in this step of the pre-assembly method. To that end, the corresponding connection means (10', 10", 10"') will be used, such as, for example, those shown in Figures 2 and 3, based on a set of screws (10'), nuts (10"), and adjustable U-bolts (10'") which firmly clamp the purlin (5) to the shaft (4) by tightening means.

Likewise, in the example of Figures 2-3, it can be seen how the fitting (10) of the purlins (5) in this preferred embodiment is performed with the shafts (4) being located outside the conveyance line (7) (that is, with the shaft (4) longitudinally protruding from said line (7)), in a discontinuous portion thereof, such that the connection means (10', 10", 10'") for connecting to the purlins (5) can be applied in the lower region of the shaft (4), according to the arrangement thereof on the mentioned conveyance line (7). More preferably, the discontinuous region of the conveyance line (7) has a length less than half the length of the shafts (4), at the end of which a new line (7, 7'), preferably having two substantially parallel segments, will start, such that the already fixed purlins (5) are what are supported thereon, instead of the shaft (4) (which will be arranged between the two conveyance lines (7, 7')). This solution allows performing the assembly of the purlins (5) in an uninterrupted manner in the conveyance line (7, 7'), maintaining the forward movement of the components and following a single layout in the assembly line, and preventing the connection means (10', 10", 10'") from hindering the sliding on said line (7, 7'). Likewise, the two regions of the conveyance line (7, 7') separated by the discontinuous region will have a difference in height suitable for overcoming the unevenness existing between the support area of the shaft (4) and the support area of the purlins (5) (typically in the order of substantially 15 cm).

### d) Fitting section (11) for fitting ball joints (6):

In those solar trackers based on a rotating shaft (4) and a set of ball joints (6) for connecting to the posts of said trackers, the plant (1) of the invention may contemplate an optional step of fitting (11) the mentioned ball joints (6) before, simultaneously to, or after the fitting of the purlins (5). This step can be performed both in the discontinuous segment of the conveyance line (7) and in a later region of said line, based on two segments (7, 7') on which the purlins (5) are supported (that is, the access to the later part of the shaft (4) being free).

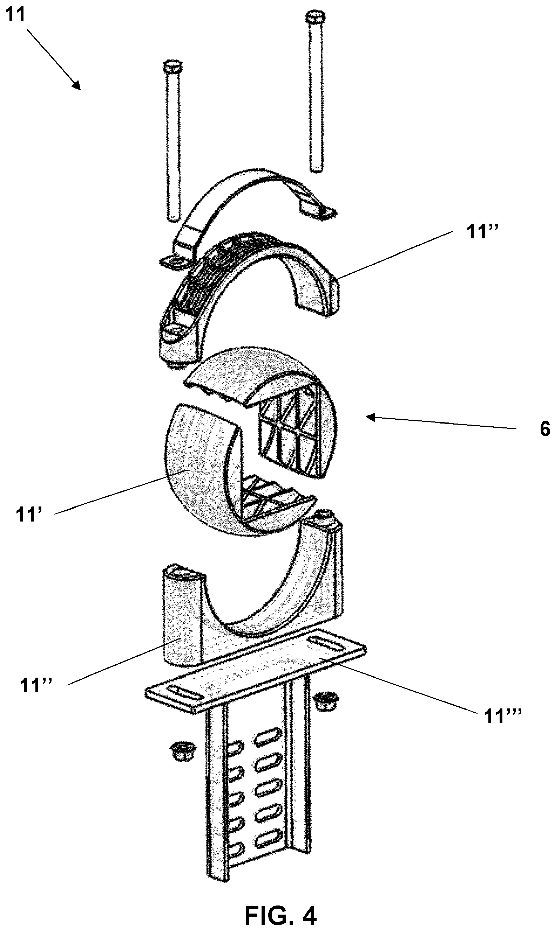

Preferably, as depicted in Figures 4-5 herein, the ball joints (6) are connected to the shaft (4) of the tracker by means of a system of bushings (11') that can be fixed through clamps (11") (for example, tightening with screws). More preferably, the ball joints (6) will also have support means (11"') that can be fixed to the posts of the tracker. As explained, the fixing of the ball joints (6) to the posts will not be performed in the mobile plant (1), but rather in the actual solar field, after the pre-assembly of the units (2).

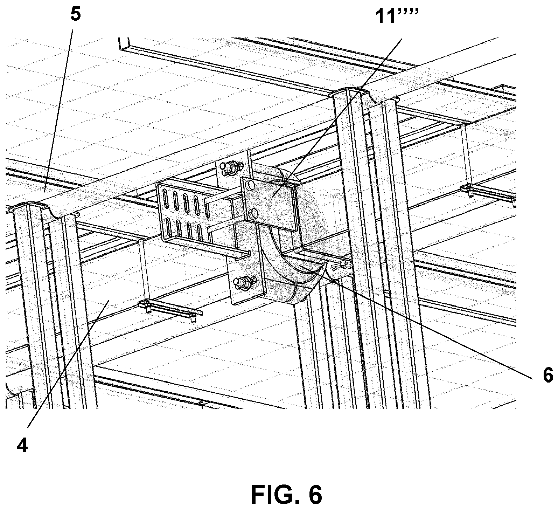

Once the fitting (11) of the ball joints (6) to the shaft (4) has been performed, at any time before the stockpiling of the units (2), it is possible to perform a later sub-step of orienting the ball joints (6), securing them such that the rotation or displacement thereof is prevented during the process of handling or storing the unit (2). To that end (and as shown in Figure 6), a locking element (11"") for locking the ball joint (6) is preferably placed on the shaft (4), improving both the safety of the components during final stockpiling and the optimization of the total space of the set. The locking element (11"") may comprise flat bars, screws, U-bolts, flanges, or any other similar device intended for that purpose.

### e) Installation section (12) for installing photovoltaic panels (3):

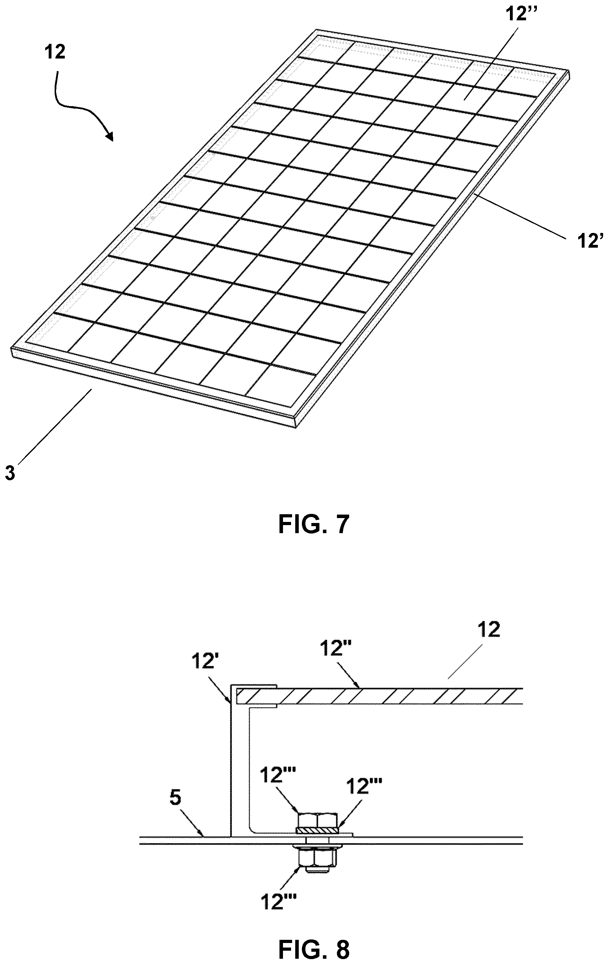

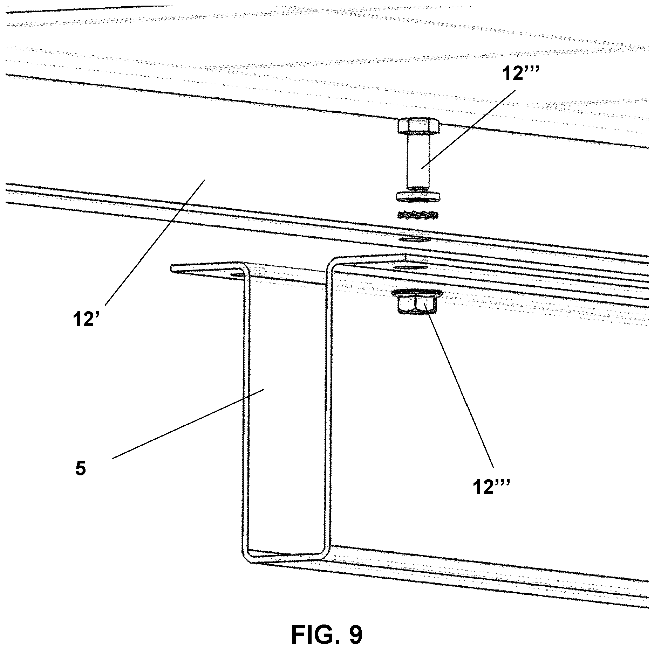

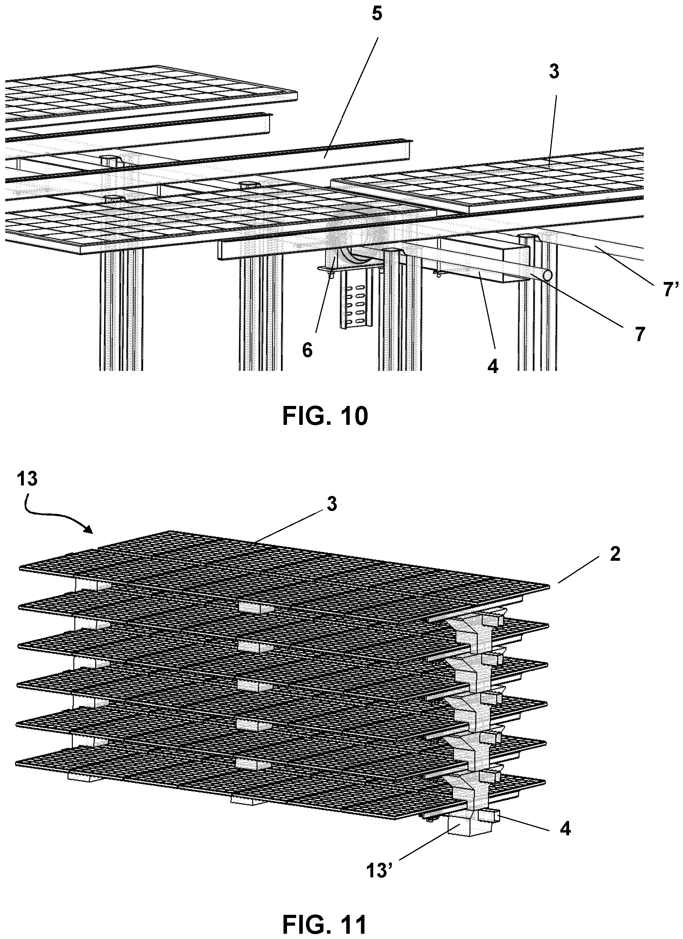

In this step, the installation (12) of the photovoltaic panels (3) on the purlins (5) of the solar tracker is carried out. As shown in Figures 7-9, said panels are preferably formed by a frame (12') and by a plurality of photovoltaic cells (12"). The installation of the panels (3) on the purlins (5) is preferably performed by means of fixing their frames (12') through tightening means (12'"), such as bolts, rivets, pegs, screws, and corresponding nuts or washers. Figures 8 and 9 herein show two views which illustrate the position of the panels (3) in relation to the purlins (5), as well as the tightening means (12"') for the fixing thereof. Likewise, Figure 10 shows a structure of the shaft (4) of the tracker on which there are fixed ball joints (6) and purlins (5), and on the latter, some of the photovoltaic panels (3) of the unit (2).

### f) Finishing section for finishing the pre-assembly and stockpiling (13) of units (2):

Once the placement and fitting of all the photovoltaic panels (3) on the purlins (5) in a unit (2) has been completed, said unit will be finished and ready for stockpiling (13) together with other also finished units (2). At that point, the removal of the unit (2) from the conveyance line (7, 7') is performed (preferably by means of a crane), and the stockpiling thereof on a support structure (13') suitable for receiving a plurality of units (2) in a modular and compact manner is carried out (see the example in Figure 11). In this manner, they can all be transferred together from the mobile pre-assembly plant (1) to the point of installation in the solar field. Said transfer will preferably be performed by loading the support structure (13') with the units (2) in a vehicle and taking it to the line of posts of the solar tracker, where each unit (2) will be connected to said posts (for example, through the supports (11'") of the ball joints (6) thereof), forming the complete structure of the tracker.

## Claims

1. A pre-assembly plant (1) for the pre-assembly of units (2) of a photovoltaic solar tracker, where each of said units (2) comprises a set of photovoltaic panels (3) arranged on a structure formed by a main shaft (4) and a plurality of transverse purlins (5), where said structure is suitable for being fixed to a set of posts driven, anchored, or cemented on the terrain of a solar field,
**characterized in that** said plant (1) comprises a conveyance line (7, 7') for conveying components of the units (2), in the proximity of which at least the following pre-assembly sections are arranged:
- a section equipped with receiving means for receiving components of the units (2), such as photovoltaic panels (3), shafts (4), and purlins (5), as well as the connecting elements therebetween, and an unloading area (8) thereof;
- a fitting section (10) for fitting the purlins (5) to the shafts (4);
- an installation section (12) for installing photovoltaic panels (3) on the purlins (5);
- a finishing section for finishing the pre-assembly of the units (2) and for the stockpiling (13) thereof in support structures (13').

2. The pre-assembly plant (1) according to the preceding claim, wherein the conveyance line (7, 7') comprises at least one discontinuous region, suitable for performing pre-assembly operations on the units (2) at a lower height than that of said line (7, 7').

3. The pre-assembly plant (1) according to the preceding claim, wherein the discontinuous region of the conveyance line (7) has a length less than half the length of the shafts (4).

4. The pre-assembly plant (1) according to any of the preceding claims, wherein the conveyance line (7, 7') comprises at least one region with a conveyance segment (7) on which the main shaft (4) of the unit (2) can be longitudinally arranged, and one region with two substantially parallel conveyance segments (7, 7') on which the purlins (5) of the units (2) can be transversely arranged, the shaft (4) remaining between said segments (7, 7'), suspended from the purlins (5).

5. The pre-assembly plant (1) according to any of the preceding claims further comprising a marking section (9) for marking the shafts (4).

6. The pre-assembly plant (1) according to any of the preceding claims, wherein the units (2) further comprise one or more ball joints (6) for connection to the posts of the solar trackers, and wherein said plant (1) comprises a fitting section (11) for fitting the mentioned ball joints (6) to the main shafts (4) of the units (2).

7. The pre-assembly plant (1) according to the preceding claim, wherein the ball joints (6) are connected to the main shaft (4) by means of a system of bushings (11') that can be fixed through clamps (11").

8. The pre-assembly plant (1) according to any of claims 6-7, wherein the ball joints (6) comprise support means (11"') that can be fixed to the posts of the tracker.

9. The pre-assembly plant (1) according to any of the preceding claims, wherein the finishing section for the pre-assembly and stockpiling (13) of units (2) comprises a plurality of modular and/or stackable support structures (13').

10. The pre-assembly plant (1) according to any of the preceding claims, wherein:
- said plant (1) comprises a canopy structure suitable for at least partially covering one or more of its pre-assembly sections (8, 10, 12, 13);
- said plant (1) comprises several conveyance lines (7) for the assembly of the units (2) in parallel;
- said plant (1) comprises one or more of its sections arranged in a rolling installation; and/or
- said plant (1) has a mobile and/or uninstallable structure of the solar field.

11. A pre-assembly method for the pre-assembly of units (2) of a photovoltaic solar tracker in a plant (1) according to any of the preceding claims, comprising the performance of the following steps, in any technically possible order:
- the components (3, 4, 5) of the units (2) are conveyed to an unloading area (8) thereof, and the main shafts (3) of the units (2) are arranged longitudinally on the conveyance line (7, 7');
- the purlins (5) are fitted (10) to the main shafts (4) of the units (2);
- the photovoltaic panels (3) are installed (12) on the purlins (5);
- the pre-assembled units (2) are removed from the conveyance line (7) and stockpiled (13) on support structures (13') for the subsequent conveyance thereof to the solar field.

12. The method according to the preceding claim, comprising a step of marking (9) the shafts (4) for the subsequent assembly of the purlins (5) or ball joints (6) of the solar tracker on the marks arranged in said shafts (4).

13. The method according to any of claims 11-12, comprising a step of fitting (11) the ball joints (6) to the main shafts (4) of the units (2) and, optionally, angularly orienting said ball joints (6) prior to the stockpiling (13) of the units (2).

14. The method according to any of claims 11-13, wherein said plant (1) has a mobile and/or uninstallable structure of the solar field, and wherein said method comprises removing said structure after carrying out the pre-assembly of a plurality of units (2); and/or
wherein one or more of the steps of said method is carried out in a partially or totally robotized way.

15. An installation method for installing a photovoltaic solar tracker, comprising:
- the performance of a pre-assembly method for the pre-assembly of one or more units (2) according to any of claims 11-14;
- the conveyance of said units (2) in a stockpiled manner to a point of installation in the solar field; and
- the assembly thereof on a plurality of posts driven, anchored, or cemented on the terrain.
